(19) Europäisches Patentamt
European Patent Office
Office européen des brevets

(11) Veröffentlichungsnummer : **0 016 366**
**B1**

# (12) EUROPÄISCHE PATENTSCHRIFT

(45) Veröffentlichungstag der Patentschrift : **26.01.83**

(51) Int. Cl.³ : **B 01 J 13/02**

(21) Anmeldenummer : **80101047.1**

(22) Anmeldetag : **03.03.80**

## (54) Verfahren zur Herstellung von Mikrokapseln.

(30) Priorität : **14.03.79 DE 2909950**

(43) Veröffentlichungstag der Anmeldung : **01.10.80 Patentblatt 80/20**

(45) Bekanntmachung des Hinweises auf die Patenterteilung : **26.01.83 Patentblatt 83/04**

(84) Benannte Vertragsstaaten : **BE CH DE FR GB IT NL SE**

(56) Entgegenhaltungen :
**FR A 2 120 873**
**GB A 1 359 512**
**US A 4 003 589**

(73) Patentinhaber : **BAYER AG**
**Zentralbereich Patente, Marken und Lizenzen**
**D-5090 Leverkusen 1, Bayerwerk (DE)**

(72) Erfinder : **Dahm, Manfred, Dr.**
**Am Falkenberg 29**
**D-5090 Leverkusen 31 (DE)**
Erfinder : **Jabs, Gert, Dr.**
**Wingensieferkamp 25**
**D-5068 Odenthal (DE)**
Erfinder : **Koglin, Bernd, Dr.**
**Zehntweg 27**
**D-5060 Bergisch-Gladbach 2 (DE)**
Erfinder : **Schnöring, Hildegard, Dr.**
**Rappenweg 8**
**D-5600 Wuppertal 11 (DE)**
Erfinder : **Riecke, Kurt, Dr.**
**Berliner Allee 34**
**D-4152 Kempen (DE)**

**EP 0 016 366 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von Mikrokapseln

Die Erfindung betrifft ein Verfahren zur Herstellung von Mikrokapseln für Reaktionsdurchschreibepapiere, deren farbgebende Schicht Mikrokapseln enthält, die als Kernmaterial eine Lösung von aktivierbaren Farbstoffvorstufen und als äußere Hülle ein Polyadditionsprodukt aus einem Diisocyanat mit Oxadiazintrionsstruktur und einem Diamin enthalten.

Reaktionsdurchschreibepapiere sind bekannt (vergl. M. Gutcho, Capsule Technology and Microencapsulation, Noyes Data Corporation, 1972, Seiten 242-277 ; G. Baxter in Microencapsulation, Processes and Applications, herausgegeben von J. E. Vandegaer, Plenum Press, New York, London, Seiten 127-143).

Reaktionsdurchschreibepapiere bestehen vorzugsweise aus zwei oder mehreren lose aufeinandergelegten Papierblättern, wobei das jeweils obere auf der Rückseite eine Geberschicht und das jeweils untere auf der Vorderseite eine Nehmerschicht enthält. Es ist also jeweils eine Geberschicht und eine Nehmerschicht miteinander in Kontakt. Die Geberschicht enthält Mikrokapseln, deren Kernmaterial eine Lösung eines Farbbildners in einem organischen Lösungsmittel ist und die Nehmerschicht enthält ein Material, das den Farbstoffbildner zum Farbstoff entwickelt. Beim Beschreiben werden die Kapseln unter dem hohen Druck des Schreibgerätes zerstört und das auslaufende Kernmaterial trifft auf die Nehmerschicht, so daß eine Durchschrift entsteht. Die Nehmerschicht enthält in der Regel Bindemittel und Pigmente, z.B. aktive Absorbentien, wie Kaolin, Attapulgit, Montmorillonit, Bentonit, saure Bleicherde oder Phenolharze. Man kann z.B. auf der Geberschicht säure-aktivierbare Farbstoffe und in der Nehmerschicht sauer reagierende Komponenten einsetzen.

Entscheidend für die Qualität der Reaktionsdurchschreibepapiere sind die Mikrokapseln, in denen der Farbbildner in Form einer Lösung eingelagert ist. Die Kapselhülle muß sehr dicht für die Farbbildner-Lösung sein, so daß das Lösungsmittel nicht verdampft, sonst wird die Lagerfähigkeit des Papiers herabgesetzt. Andererseits müssen die Hüllen unter dem Druck des Schreibgerätes leicht zerbrechen und dürfen daher nicht zu dick sein.

Mikrokapseln für Reaktionsdurchschreibepapiere müssen demnach möglichst dicht und für Farbbildner und Lösungsmittel undurchlässig, jedoch gleichzeitig genügend druckempfindlich sein.

Zur Herstellung von Mikrokapseln für Reaktionsdurchschreibepapiere sind u.a. Verfahren zur Phasentrennung und zur Phasengrenzflächenpolymerisation beschrieben worden.

Kapselwandbildungskomponenten sind ebenfalls in großer Zahl angegeben, beispielsweise die Kombination bestimmter ausgewählter Diisocyanate und Wasser, Diol oder Diamin.

Aus der deutschen Offenlegungsschrift 23 11 712 ist weiterhin die Verwendung von Umsetzungsprodukten aus Dioder Polyolen vom Molekulargewicht 400-10.000 und Di- oder Polyisocyanaten als Isocyanatkomponenten bei der Mikroverkapselung bekannt. Man kann so Lösungen von Farbstoffvorstufen für Durchschreibepapiere einkapseln ; diese Kapseln sind für die für das Verfahren notwendigen, meist aromatischen und alkylaromatischen Lösungsmittel nicht undurchlässig, obwohl dies für die Wirkung der Reaktionsdurchschreibepapiere unbedingt erforderlich ist. Sie neigen auch sehr stark zur Agglomeration. Kapselagglomerate stören erheblich, weil einzelne Kapseln schon bei der Herstellung der Papiere zerstört werden und so ein fleckiges Papier erhalten wird. Unter ungünstigen Bedingungen wird sogar die Schreibleistung der Papiere bedeutend herabgesetzt. Man braucht daher einzelne, nicht zur Agglomeration neigende Kapseln für Durchschreibepapiere.

Die Mikrokapseln für die Herstellung von Durchschreibepapieren müssen

1. für den Farbbildner und sein Lösungsmittel undurchlässig sein. Durchlässigkeit für den Farbbildner führt zur Verfärbung, Durchlässigkeit für das Lösungsmittel zum Eintrocknen des Kapselinhalts und damit zur Wirkungslosigkeit, und sie dürfen

2. erst unter dem Druck des Schreibgerätes zerbrechen. Die Kapselwand muß also andersartige Belastungen überstehen ;

3. sie sollen möglichst als individuelle Teilchen vorliegen und nicht als größere Agglomerate ;

4. sie müssen sich leicht auf die Papieroberfläche aufbringen und sofort fixieren lassen. Dazu müssen sie so temperaturstabil sein, daß sie Temperaturen bis zu 100 °C beim Trocknen unbeschadet überstehen.

5. Die Mikrokapseln für Durchschreibepapiere müssen insbesondere eine Feuchtwärmelagerung bei 70 °C und 75 % relativer Luftfeuchtigkeit überstehen.

Der Erfindung liegt die Erkenntnis zugrunde, daß Farbbildnerlösungen enthaltende Mikrokapseln für Reaktionsdurchschreibepapiere aus dem Reaktionsprodukt von Diisocyanaten der Formel I

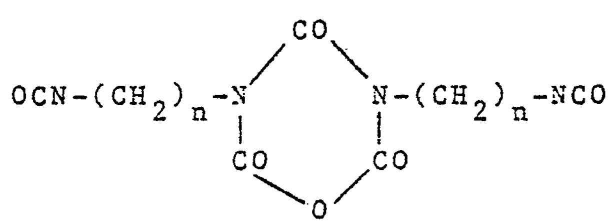

(I)

wobei n = 3-6

und einem Diamin die Feuchtwärmelagerung (12 Tage, 70 °C, 75 % rel. Feuchte) überstehen, wenn als Lösungsmittel für die Farbbildner ein Gemisch aus Alkylnaphthalin und Isoparaffin mit 10-20 C-Atomen benutzt wird, und die Mikrokapseln nach ihrer Bildung mindestens 2 Stunden bei 60-70 °C getempert werden.

Gegenstand der Erfindung ist somit ein Verfahren zur Herstellung von Mikrokapseln, die eine Lösung eines Farbstoffbildners enthalten, wobei der Farbstoffbildner als Lösung in einem organischen Lösungsmittel eingekapselt ist in Kapseln aus dem Polyadditionsprodukt eines Diisocyanats der Formel I

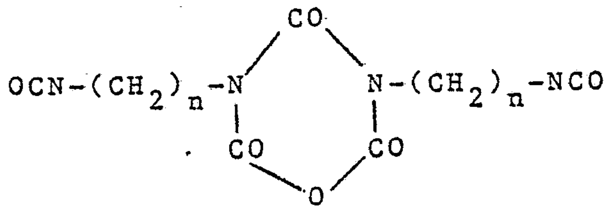

(I)

n = 3-6

und einem Diamin, und ist dadurch gekennzeichnet, daß als Lösungsmittel für den Farbbildner ein Gemisch aus Alkylnaphthalin und Isoparaffin mit 10-20 C-Atomen benutzt wird, und die Mikrokapseln nach ihrer Bildung mindestens 2 Stunden bei 60-70 °C getempert werden.

Geeignete Diamine sind aliphatische primäre oder sekundäre Diamine, wie z.B.:

Ethylendiamin-(1,2), Bis(3-aminopropyl)-amin, Hydrazin, Hydrazinethanol-(2), Bis-(2-methylaminoethyl)-methylamin, 1,4-Diaminocyclohexan, 3-Amino-1-methyl-aminopropan, N-Hydroxy-ethylethylendiamin, N-Methyl-bis(3-aminopropyl)-amin, 1,4-Diamino-n-butan, 1,6-Diamino-n-hexan, Ethylen-(1,2)-diamin-N-Ethyl-sulfonsäure (als Alkalisalz), 1-Aminoethylethylendiamin-(1,2), Bis-(N,N'-aminoethyl)-ethylendiamin-(1,2). Hydrazin und seine Salze werden im vorliegenden Zusammenhang ebenfalls als Diamine angesprochen.

Farbbildner sind im wesentlichen farblose, basische Produkte, die verschiedene chromophore Gruppen haben.

Beispiele hierfür sind Bis-(p-aminoaryl)-phthalide, Leukoauramine, Acylauramine, α,β-ungesättigte Arylketone, basische Monoazofarbstoffe, Rhodamin-B-Lactame, wie die N-(p-nitrophenyl)-Rhodamin-B-Lactame, durch Aminogruppen substituierte Polyarylcarbinole und deren Umsetzungsprodukte, z.B. deren Ester oder Ether und verschiedene heterocyclische Spirane. Bevorzugte Verbindungen sind 3,3-Bis-(p-dimethylaminophenyl)-6-dimethylamino-phthalid (Kristallviolettlactan), Benzoylleuko-Methylenblau und Derivate von Michlers Hydrol, insbesondere das p-Toluolsulfinat von Michlers Hydrol.

Erfindungsgemäße Lösungsmittel für die Farbbildner und für die Diisocyanate sind Gemische aus Alkylnaphthalinen und Isoparaffinen mit 10-20 C-Atomen. Bevorzugt sind Gemische aus 70-90 Gew.-Teilen Alkylnaphthalinen und 10-30 Gew.-Teilen Isoparaffin.

Als Alkylnaphthaline lassen sich insbesondere di-alkylierte Naphthaline einsetzen, wie z.B. Diisopropylnaphthalin, Dibutylnaphthalin, Methylbutylnaphthalin, Ethylisobutylnaphthalin u.a.

Als Isoparaffine mit 10 bis 20 C-Atomen sind Alkane mit mehreren Seitenketten einsetzbar. Derartige Isoparaffine können beispielsweise durch Oligomerisierung von Propylen und/oder Isobutylen gewonnen werden. Als typische Vertreter seien Isododecan, Isohexadecan und Isoeikosan genannt.

Lösungsmittel für die Diamine ist im allgemeinen Wasser.

Zur Herstellung der Mikrokapseln kann man zunächst das Diisocyanat und die Farbstoffvorstufe in dem erfindungsgemäßen Lösungsmittel lösen und diese organische Phase in einer wäßrigen, die gegebenenfalls auch Schutzkolloide enthalten kann, emulgieren. Zu dieser Emulsion gibt man dann die wäßrige Diaminlösung in stöchiometrischer Menge.

Zur Emulgierung und Stabilisierung der gebildeten Emulsion werden der wäßrigen Phase Schutzkolloide und Emulgierhilfsmittel zugesetzt. Beispiele für solche als Schutzkolloide wirkende Produkte sind Carboxymethylcellulose, Gelatine und Polyvinylalkohol. Beispiele für Emulgatoren sind oxethyliertes 3-Benzylhydroxybiphenyl, Umsetzungsprodukte von Nonylphenol mit unterschiedlichen Mengen Ethylenoxid und Sorbitanfettsäureester.

Den Verlauf der kapselwandbildenden Polyaddition kann man anhand der Abreaktion der Isocyanatgruppen verfolgen.

Die Mikrokapseln können kontinuierlich oder diskontinuierlich hergestellt werden. Man verwendet im allgemeinen Dispergiergeräte, die ein Schergefälle erzeugen. Beispiele hierfür sind Blatt-, Korb-, Schnellrührer, Kolloidmühlen, Homogenisatoren, Ultraschalldispergatoren, Düsen, Strahldüsen, Supratonmaschinen. Die Stärke der Turbulenz beim Vermischen ist in erster Linie bestimmend für den Durchmesser der erhaltenen Mikrokapseln. Kapseln in der Größe von 1 bis 2 000 µm können hergestellt werden. Bevorzugt sind Kapseln mit Durchmessern von 2 bis 20 µm. Die Kapseln agglomerieren nicht und haben eine enge Teilchengrößenverteilung. Das Gewichtsverhältnis von Kernmaterial zu Hüllenmaterial ist 50-90 zu 50-10. Am Ende der Kapselherstellung wird mindestens 2 Stunden bei 60-70 °C getempert.

Druckempfindliche Durchschreibepapiere können aus den Kapseln in bekannter Weise hergestellt

werden (vergl. M. Gutcho, Capsule Technology and Microencapsulation, Noyes Data Corp., 1972, Seiten 242-277). Die primär erhaltenen Mikrokapselsuspensionen enthalten im allgemeinen 10 bis 35 Gew.-% Kapseln. Sie neigen etwas zum Aufrahmen, solange sie kein Bindemittel enthalten. Dies läßt sich für eine Konzentration ausnutzen. Die bevorzugte Kapselgröße liegt um 10 µm. Die homogenisierten, mit Binder und gegebenenfalls inerten Füllstoffen, wie Talkum oder Kaolin, versehenen Kapselsuspensionen können manuell mit einem Blumendrahtrakel oder maschinell, beispielsweise mit einer Luftbürste, in Auftragsmengen von 4-8 g/m$^2$ auf Rohpapier (z.B. von 40 bis 100 g/m$^2$) aufgetragen werden. Die Beschichtung von Rohpapieren ist beschrieben in den deutschen Offenlegungsschriften 1.934.457 und 1.955.542. Die so beschichteten Papiere enthalten die erste Farbbildungskomponente ; sie werden als Geberkomponenten bezeichnet.

Die Geberkomponente ist im allgemeinen bei Durchschreibesätzen die Rückseite des Oberblattes. Die Vorderseite des nächsten Blattes ist mit der zweiten Farbgeberkomponente beschichtet. Man bezeichnet diese Schicht als Nehmerkomponente. Bei Durchschreibesätzen ist die Nehmerkomponente die Oberseite des zweiten Papierblattes. Bei Mehrfachdurchschreibesätzen müssen die folgenden Geberblätter auf der Gegenseite eine Nehmerbeschichtung tragen. Die Herstellung solcher Nehmerschichten ist bekannt und ebenfalls in den deutschen Offenlegungsschriften 1.934.457 und 1.955.542 beschrieben.

## Herstellung von Mikrokapselsuspensionen

### Beispiel 1

Herstellung von 4 kg einer 30 %igen Mikrokapselsuspension

11,22 g Benzoylleukomethylenblau (NBL) und 33,66 g Kristallviolettlacton (KVL) werden in 780,1 g Diisopropylnaphthalin durch Erwärmen nicht über 95 °C und unter Rühren klar gelöst und zu dieser Lösung nach dem Abkühlen 195 g $C_{10}$-$C_{12}$-Isoparaffin und 180 g Oxadiazintriondiisocyanat zugegeben. Die organische Phase wird in 2.250 g 0,5 %ige wäßrige Polyvinylalkohollösung gegeben und an einer Ultraschallpfeife emulgiert, wobei eine Korngröße von 11 µm erreicht wird. Dieser Emulsion wird unter Rühren eine 5,5 %ige Aminlösung, bestehend aus 18,9 g Diethylentriamin (DET), 9,8 g Ethylendiamin (ED) in 505,1 g entsalztem Wasser zugefügt. Die Aminmengen sind stöchiometrisch auf das Isocyanat berechnet.

Nach der Aminzugabe wird 1 Stunde bei Raumtemperatur nachgerührt, dann in 1,5 Stunden auf 60 °C erhitzt und 2 Stunden bei 60 °C nachgerührt.

Die Gewichtsverhältnisse des gesamten Ansatzes sehen wie folgt aus :

Diisopropylnaphthalin : Isoparaffin : 80 : 20
KVL : NBL : 3 : 1--3,3 % KVL/1,1 % NBL im Diisopropylnaphthalin/Isoparaffin
15 % Oxadiazintriondiisocyanat in Farbgeberlösung
DET : ED : 2 : 1
30 % gesamtorganische Phase (Diisopropylnaphthalin/Isoparaffin/KVL/NBL/Oxadiazintrion)
70 % wäßrige Phase (Wasser/Polyvinylalkohol/DET/ED)

### Beispiel 2

Herstellung von 4 kg einer 30 %igen Mikrokapselsuspension

Es wird, wie in Beispiel 1 beschrieben, verfahren, jedoch mit dem Unterschied, daß anstelle des Gemisches aus Diethylentriamin/Ethylendiamin reines Diethylentriamin eingesetzt wird. Hierzu werden 560 g einer 5,5 %igen Diethylentriamin-Lösung (31,0 g reines DET) eingesetzt und entsprechend nur 2.240 g 0,5 %ige Polyvinalalkohollösung.

### Beispiel 3

Herstellung von 4 kg einer 30 %igen Mikrokapselsuspension

1 200 g organische Phase werden, wie unter Beispiel 1 beschrieben, hergestellt, in 2310 g 0,5 %ige Polyvinylalkohol- (88 % Verseifungsgrad)-lösung gegeben und 1 Minute lang an einer Mischsirene bei 8900 U/Min. emulgiert. Nach dieser Zeit ist die gewünschte Tröpfchengröße der Emulsion erreicht. Die Vernetzung wird, wie unter Beispiel 1 beschrieben, am Laborrührer mit 490 g 5,5 %iger Ethylendiaminlösung (27,0 g Ethylendiamin) durchgeführt. Auch die Nachbehandlung ist die gleiche wie beim Beispiel 1.

### Beispiel 4

Herstellung von 4 kg einer 30 %igen Mikrokapselsuspension

Es wird, wie in Beispiel 1 beschrieben, verfahren, jedoch mit dem Unterschied, daß als Vernetzer Hydrazinhydrat verwendet wird. Hierzu werden 502,1 g einer 5,5 %ig. Hydrazinhydratlösung (32,9 g wasserfreies Hydrazinhydrat) eingesetzt und entsprechend 2 265 g 0,5 %ige Polyvinylalkohollösung.

Beispiel 5

Herstellung von 4 kg einer 30 %igen Mikrokapselsuspension

Es wird, wie in Beispiel 1 beschrieben, verfahren, wobei aber anstelle des $C_{10}$-$C_{12}$-Isoparaffins das Isoeikosan eingesetzt wurde.

Beispiel 6

Herstellung von 4 kg einer 30 %igen Mikrokapselsuspension

Es wird, wie in Beispiel 1 beschrieben, verfahren, jedoch mit dem Unterschied, daß anstelle des $C_{10}$-$C_{12}$-Isoparaffins das Isohexadecan als Verschnittmittel für das Diisopropylnaphthalin eingesetzt wurde.

Beispiele 7a und 7b (Vergleichsbeispiele)

45 g Kristallviolettlacton werden in 639,1 g Isopropyldiphenyl durch Erwärmen auf Temperaturen bis 95 °C und unter Rühren klar gelöst. Nach dem Abkühlen gibt man zuerst 344,1 $C_{10}$-$C_{12}$-Isoparaffin und dann 180 g eines flüssigen Gemisches aus dimerem und trimerem Hexamethylendiisocyanat zu und bringt beides durch Rühren in Lösung. Diese fertige organische Phase wird in 2 300 g 0,5 %ige wäßrige Polyvinylalkohol-Lösung gegeben, mit einem Pendralikrührer gut voremulgiert und dann mittels einer Ultraschallpfeife zu Ende emulgiert. Dann wird dieser Emulsion unter Rühren eine wäßrige Aminlösung, bestehend aus 19,2 g Diethylentriamin, 9,8 g Ethylendiamin und 47,1 g destilliertem Wasser zugegeben. Nach der Aminzugabe wird einmal 1 Stunde bei Raumtemperatur (Beispiel 7a), zum anderen Male 1 Stunde bei Raumtemperatur, und anschließend 2 Stunden bei 60 °C am Laborrührer nachgerührt (Beispiel 7b).

Prüfungen der Mikrokapselsuspensionen

Mit allen Mikrokapselsuspensionen wurden kohlefreie Durchschreibepapiere hergestellt, die einem Alterungstest bei 70 °C und 75 % rel. Feuchte während 0, 3, 6 und 12 Tagen unterworfen wurden.

Hierzu wurde wie folgt verfahren :

Die in den Beispielen 1 bis 7b hergestellten Mikrokapseldispersionen wurden mit einem Drahtrakel (30 µm) auf ein Trägerpapier aufgestrichen und auf diese Weise ein Deckblatt eines kohlefreien Durchschreibepapiers hergestellt.

Zur Überprüfung der Alterungsstabilität der Kapseln wurde folgender Test durchgeführt :

Eine Probe des hergestellten Papiers wurde mit der beschichteten Seite auf ein Nehmerpapier gelegt und 7 weitere Papiere aufgelegt. Mit einer Schreibmaschine wird bei konstanter Anschlagstärke eine Fläche von ca. 4 × 4 cm so eng wie möglich mit dem Buchstaben « w » beschriftet. Die nun auf dem untersten Nehmerpapier sichtbare Durchschrift der Papierprobe wird auf ihre Schriftintensität untersucht, indem man den Verlust an Reflexion gegenüber nicht beschriftetem Papier mit einem Remissionsmeßgerät ermittelt.

Drei weitere Proben des beschichteten Papiers werden in einer Klimakammer 3, 6 und 12 Tage bei 70 °C und 75 % rel. Feuchte getempert. Bei jedem dieser so behandelten Papiere wird die Messung der Durchschreibeintensität, wie beschrieben, wiederholt.

Das Ergebnis der an den Beispielen 1 bis 7b durchgeführten Tests ist in der nachfolgenden Tabelle wiedergegeben.

Es zeigt sich, daß nur die gemäß dem erfindungsgemäßen Verfahren hergestellten Kapseln eine ausreichende Alterungsstabilität aufweisen.

Tabelle

Schriftintensität des 8. Durchschlages (% Remissionswert) nach Lagerung bei 70 °C, 75 % rel. Feuchte über

| Beispiel | 0 Tage | 3 Tage | 6 Tage | 12 Tage |
|---|---|---|---|---|
| 1 | 45,5 | 45,6 | 45,8 | 45,2 |
| 2 | 47,1 | 44,1 | 42,9 | 43,1 |
| 3 | 46,2 | 44,8 | 44,0 | 43,8 |
| 4 | 50,8 | 48,1 | 46,2 | 47,6 |

Tabelle (Fortsetzung)

Schriftintensität des 8. Durchschlages (% Remissionswert) nach Lagerung bei 70 °C, 75 % rel. Feuchte über

| Beispiel | 0 Tage | 3 Tage | 6 Tage | 12 Tage |
|---|---|---|---|---|
| 5 | 42,8 | 42,8 | 41,8 | 41,1 |
| 6 | 45,5 | 45,5 | 45,9 | 45,1 |
| 7a | 57,2 | 10,0 | nicht meßbar | keine Durchschrift |
| 7b | 51,0 | 31,4 | 27,1 | 25,2 |

**Anspruch**

Verfahren zur Herstellung von Mikrokapseln, die eine Lösung eines Farbstoffbildners enthalten, wobei der Farbstoffbildner als Lösung in einem organischen Lösungsmittel eingekapselt ist in Kapseln aus dem Polyadditionsprodukt eines Diisocyanats der Formel I

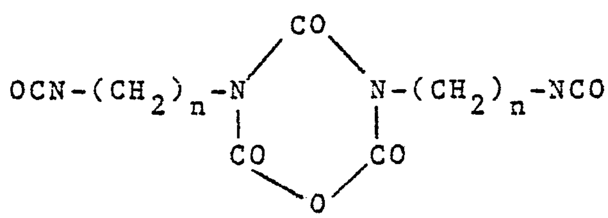

(I)

n = 3-6

und einem Diamin, dadurch gekennzeichnet, daß als Lösungsmittel für den Farbbildner ein Gemisch aus Alkylnaphthalin und Isoparaffin mit 10 bis 20 C-Atomen benutzt wird, und die Mikrokapseln nach ihrer Bildung mindestens 2 Stunden bei 60-70 °C getempert werden.

**Claim**

Process for the preparation of microcapsules which contain a solution of a colour former, the colour former being encapsulated in the form of a solution in an organic solvent in capsules of the polyaddition product of a diisocyanate of the formula I

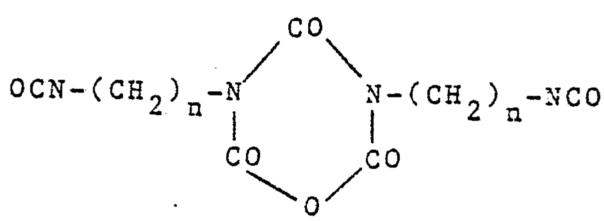

(I)

n = 3-6

and a diamine, characterised in that a mixture of alkyl naphthalene and isoparaffin with 10 to 20 C atoms is used as the solvent for the colour former and the microcapsules are tempered for at least 2 hours at 60-70 °C after their formation.

**Revendication**

Procédé de fabrication de microcapsules qui contiennent une solution d'un formateur de colorant, le formateur de colorant étant encapsulé sous la forme de solution dans un solvant organique dans des capsules en le produit de polyaddition d'un diisocyanate de formule I

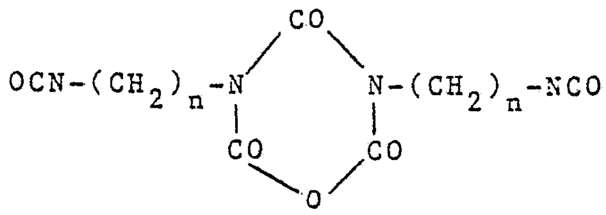

(I)

avec n = 3-6
et d'une diamine, caractérisé en ce qu'on utilise comme solvant pour le formateur de colorant un mélange d'un alcoylnaphtalène et d'une isoparaffine ayant 10 à 20 atomes de carbone et en ce que les microcapsules après leur formation sont soumises à un traitement thermique d'au moins 2 heures à 60-70 °C.